# EUROPEAN PATENT SPECIFICATION

(11) **EP 0 905 009 B1**
(45) Date of publication and mention of the grant of the patent: **27.08.2003**
(21) Application number: 98610036.0
(22) Date of filing: 14.09.1998
(51) Int. Cl.: B62D 25/16

(54) **Mudguard for a vehicle, especially for a tractor for trailers.**
Kotflügel für Fahrzeuge , insbesondere für eine Zugmaschine für Anhänger
Garde-boue pour véhicule , notamment pour tracteur de remorque

(30) Priority: 18.09.1997 DK 106997
(43) Date of publication of application: 31.03.1999
(73) Proprietor: HBN-Teknik A/S, 4100 Ringsted (DK)
(72) Inventor: Andersen, Steen, 4100 Ringsted (DK)
(74) Representative: Larsen, Hans Ole

(56) References cited:
- EP-A- 0 665 158
- DE-U- 8 609 090
- GB-A- 2 151 569

## Description

### The invention's field of application

The present invention concerns a mudguard for a wheeled vehicle, especially a rear guard for a tractor or motor forecarriage for the pulling of a trailer, said guard being configured in such a manner that two guard holders, which extend from the side of the chassis frame of the tractor or motor forecarrige, can be received in selectable positions on the outer side of the guard.

### The known technique

Two guard holders in the form of tubes or other forms of profiles which are either straight or bent in fashion are mounted on the side of the chassis frame of a tractor and extend laterally out to the side. The guard is mounted on the guard holders by means of various brackets.

The guard holders retain the guards in a pre-determined position so that the relevant legislative demands are met, for example concerning water-splash from the wheels.

However, depending on the use for which they are intended, given types of tractors can be equipped with wheels of different sizes and/or types of suspensions.

### The technical problem which needs to be solved

With changed combinations of tyre dimensions and/or types of suspensions, the guard type and/or the vertical position of the guard must be changed, which makes it necessary to change the position of the guard holders, or use must be made of another guard holder of a configuration which allows for the changed positioning and shape of the guard.

Therefore, in order to comply with the legislation of different countries, it will often be necessary to use guard holders and/or guards of different configurations for each combination of tyre dimension and/or suspension type. This involves guard holders and guards of many variants and herewith related logistical, design and construction costs.

A guard which solves this problem is known from DE 8 609 090 U, which discloses all features of the preamble of claim 1. The guard can be fixed in various positions. The position of the guard holders also have to be changed, however.

With the invention it is desired to provide an improved, alternative type of guard which, all depending on the choice of tyre dimension and/or suspension type, will be able to be mounted in different lateral positions while using one and the same type of guard holder mounted in one and the same position on the chassis frame, so that one type of guard with its associated set of retaining brackets will be able to fulfil legislative demands for many combinations of tyres and suspensions.

### The new technique

The special characteristic of the guard according to the invention is that the guard holder parts each have a series of recesses which are arranged in a straight line parallel with the symmetrical plane.

### The technical effect

By using the above-mentioned technique in connection with the known technique, i.e. by the positioning of a guard holder in a given recess in the guard holder part, the guard can easily be brought to an optimum horizontal height above the periphery of the wheel which is to be guarded, and the guard with guard holder parts can thereafter be displaced along the guard holders to a correct position at the side in relation to the wheel.

The dependent claims disclose advantageous embodiments for the guard according to the invention.

### The drawing

The invention and especially advantageous embodiments are explained in more detail in the following with reference to the figures in the drawing, where
- fig. 1: is a side view of a guard with guard holder parts according to the invention, where the guard holder parts have a casing and a lamp housing respectively,
- fig. 2: is a rear view of the guard with guard holder part according to fig. 1, where the guard holder part supports a lamp housing, and
- fig. 3: is a side view of a section of the guard according to figs. 1 and 2, and with a lamp housing mounted on the guard holder part.

### The example embodiment

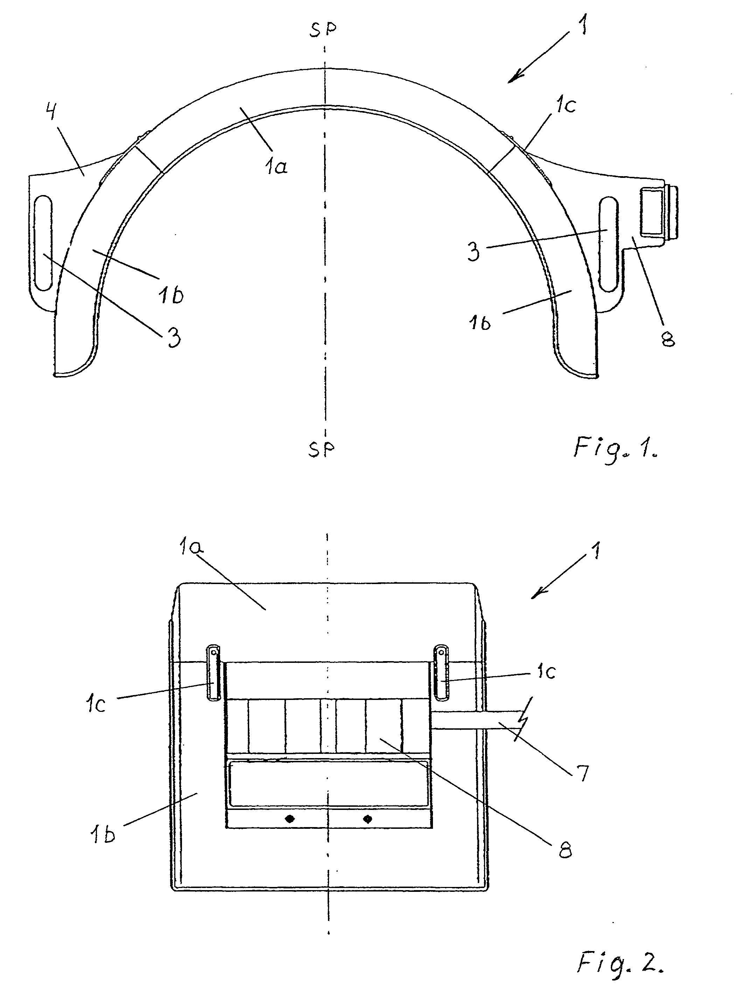

A rear guard 1 for a wheeled vehicle, especially for a tractor for the pulling of a trailer, is seen in a side view in fig. 1. The guard 1 is preferably made of plastic, and is configured in a known manner with a centre part 1a and two identical end parts 1b. The designation SP indicates the symmetrical plane which, in the guard's 1 position of use, extends vertically through the axis of a wheel which is to be guarded, so that the spraying of water from the wheel is limited.

The centre part 1a is provided along the end edges with a slot 1d which can receive a protruding tongue 1e on the end parts 1b, said slots 1d and tongues 1e being staggered in such a manner that the surfaces of the centre part 1a and the end parts 1b are flush after the assembly.

The end parts 1b are held in a fixed manner on the centre part 1a, for example by an adhesive between the slots 1d and the tongues 1e, but the parts can also be separable by means of fishplates 1c which are screwed on the parts and extend across the assemblies as shown in fig. 2.

Both of the end parts 1b are provided with guard holder parts 2 which are identical, but one of these guard holder parts 2 is designed for mounting on the foremost end part 1b of the guard 1 after having been provided with a casing 4, while the other guard holder part 2 is designed for mounting on that part of the guard 1 which faces rearwards to the driving direction after having been provided with a lamp housing 8.

The guard holder parts 2 are made of plastic and are secured to the end parts 1b in a suitable manner, or are produced in one piece with the end parts 1b.

On each guard holder part 2 there are provided a series of recesses 5, each of which is in the form of a semi-circle with the same radius as the guard holder 7. The recesses 5 are arranged along a straight line and, in the guard's position of use, extend parallel with the symmetrical plane SP and are therefore vertical in the guard's position of use.

When the guard holders 7 are mounted in a given position on the chassis frame of the tractor, the guard 1 can thus be moved up or down in relation to the wheel which is to be guarded.

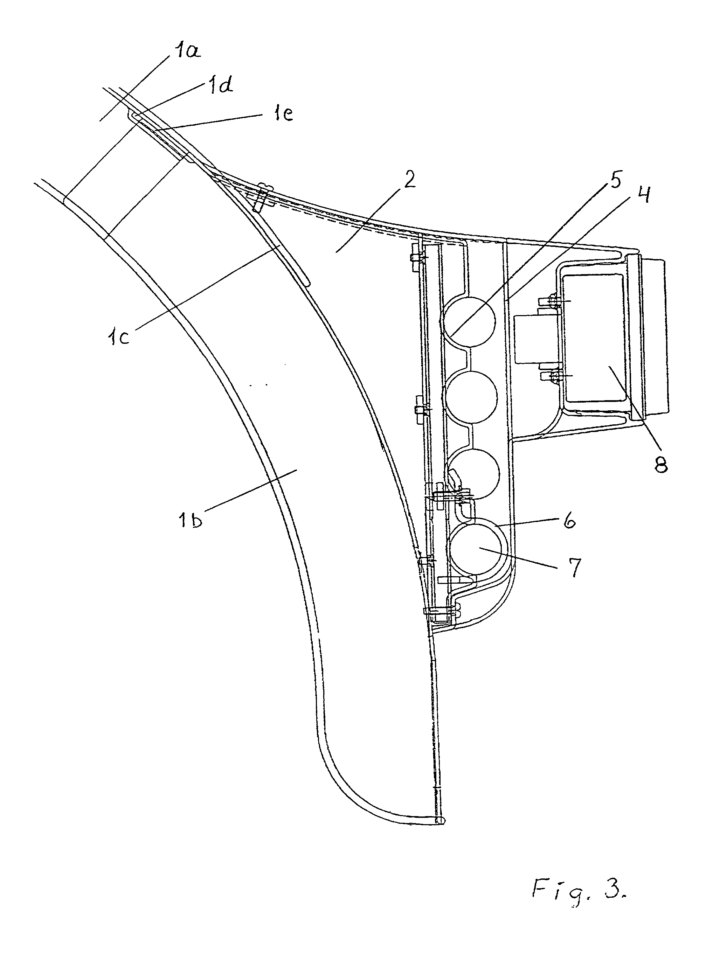

The recesses 5 are preferably configured from a strip of metal which is bent in the desired shape and is secured in the guard holder parts 2, for example by means of screws or similar securing means, as shown in fig. 3.

It will be obvious to those familiar with the art that instead of being configured from a strip of metal, the recesses 5 can also consist of plastic and be produced in one piece with a guard holder part.

Furthermore, there is a clamp 6 which can be tightened over a guard holder 7 which has been selected to be received in one of the recesses 5, so that the guard 1 can be adjusted to the correct height in relation to a wheel.

The clamp 6 is substantially semi-circular with the same radius as the guard holders 7. In the one end, the clamp 6 has a lug which extends as a tangent to the semi-circle, and which has cut-outs on the sides in such a manner that when the plane of the lug is flush with the slot, the lug on the clamp 6 can be inserted in a narrow slot in the strip with the recesses 5, and can thereafter, after having been turned 90° in relation to the slot, with its cut-outs be engaged firmly with the sides of the slot. In the other end, the clamp 6 has a tongue which extends more or less at right-angles to the lug and is provided with a hole for a screw, whereby the clamp 6 can be fastened firmly in relation to a given recess 5.

On the foremost guard holder part 2 there is provided a casing 4 which can cover the guard holder part 2, and a lamp housing 8 is mounted rearmost on the other guard holder part 2; said lamp housing is shown in fig. 3 and is otherwise of a commonly-known kind.

The casing 4 and the lamp housing 8 are configured to enclose each their guard holder part 2, and each has a slot 3 which extends parallel with the recesses 5.

The slots 3 have a breadth which is determined in accordance with the dimensions of the guard holders 7, which extend laterally out to the sides from the chassis frame of the tractor, said guard holders 7 being positioned at more or less the same horizontal height and with a predetermined mutual distance in the horizontal plane.

It will be understood that the guard according to the invention is easy to mount without any troublesome measuring of the mounting holes for the guard holders, that it is easy to adjust to an optimum position in relation to the wheel to be guarded, and that the securing of the guard is solid and can withstand influences which can arise during the use of a truck.

## Claims

1. Guard for a wheeled vehicle, especially a rear guard for a tractor for the pulling of a trailer, said guard (1) being configured in such a manner that two guard holders (7) which extend out from the side of the chassis frame of the tractor can be received in selectable positions on the outer side of the guard (1), the guard (1) having a first and a corresponding second guard holder part (2) on opposing sides of a vertical symmetrical plane (SP) which, in the guard's (1) position of use, extends through the axis of a wheel which is to be guarded, the guard holder parts (2) each having a series of recesses (5) which are configured to receive a guard holder (7) arranged to suit the guard holder parts (2) both parallel with the symmetrical plane (SP) and lengthwise with the guard holders (7), **characterized in that** the series of recesses are arranged in a straight line parallel with the symmetrical plane (SP).

2. Guard according to claim 1, **characterized in that** the recesses (5) are semi-circular with the same radius as a guard holder (7), and that each guard holder part (2) has a similarly semi-circular clamp (6) which together with a recess (5) can be tightened around a guard holder (7).

3. Guard according to claims 1-2, **characterized in that** in the one end of the clamp (6) there is a lug which extends as a tangent to the semi-circle, and has cut-outs on the sides in such a manner that when the plane of the lug is flush with a narrow slot in the strip with the recesses (5), the lug on the clamp (6) can be inserted in the slot, and can thereafter, after having been turned around 90° in relation to the slot, with its cut-outs engage firmly with the sides of the slot, and **in that** the other end of the clamp (6) has a tongue which extends more or less at right-angles to the lug and is provided with a hole for a screw, whereby the clamp (6) can be fastened firmly in relation to a given recess (5).

4. Guard according to any of the claims 1-3, **characterized in that** the guard holder parts (2) have a casing (4) or a lamp housing (8) of plastic and have a slot (3) which lies flush with the recesses (5).

5. Guard according to claims 1-4, **characterized in that** the guard holder parts (2) are of plastic, that the recesses (5) are in the form of a strip of metal, and **in that** the clamp (6) is of metal, such as stainless steel.

6. Guard according to any of the claims 1-5, **characterized in that** the guard (1) is composed of a centre part (1a) and two end parts (1b) which are assembled by means of fishplates (1c).

## Patentansprüche

1. Schutzvorrichtung für ein Radfahrzeug, insbesondere eine Schutzvorrichtung am Heck einer Zugmaschine zum Ziehen eines Anhängers, wobei die Schutzvorrichtung (1) derart gestaltet ist, dass zwei Haltevorrichtungen (7) für die Schutzvorrichtung, die sich von der Seite des Fahrgestell-Rahmens der Zugmaschine ausdehnen, an der äußeren Seite der Schutzvorrichtung (1) in wählbaren Positionen aufgenommen werden können, wobei die Schutzvorrichtung (1) ein erstes und ein entsprechendes zweites Halteteil (2) auf gegenüberliegenden Seiten einer vertikalen Symmetrie-Ebene (SP) aufweist, die in einer Benutzungsposition der Schutzvorrichtung (1) durch die Achse eines Rades verläuft, vor dem geschützt werden soll, wobei jedes der Halteteile (2) der Schutzvorrichtung eine Reihe von Auskehlungen (5) aufweist, die zur Aufnahme einer Haltevorrichtung (7) für die Schutzvorrichtung ausgestaltet sind, wobei die Haltevorrichtung (7) angeordnet ist, um die Halteteile (2) der Schutzvorrichtung sowohl parallel zu der Symmetrie-Ebene (SP), als auch längs der Haltevorrichtungen (7) für die Schutzvorrichtung zu bekommen, **dadurch gekennzeichnet, dass** die Reihe von Auskehlungen in einer geraden Linie parallel zu der Symmetrie-Ebene (SP) angeordnet ist.

2. Schutzvorrichtung gemäß Anspruch 1, **dadurch gekennzeichnet, dass** die Auskehlungen (5) halbrund mit dem gleichen Radius wie die Haltevorrichtung (7) für die Schutzvorrichtung sind und dass jedes Halteteil (2) der Schutzvorrichtung eine ebenso halbrunde Klammer (6) aufweist, die gemeinsam mit einer Auskehlung (5) um eine Haltevorrichtung (7) für die Schutzvorrichtung festgezogen werden kann.

3. Schutzvorrichtung gemäß den Ansprüchen 1 bis 2, **dadurch gekennzeichnet, dass** an dem einen Ende der Klammer (6) ein Ansatz vorhanden ist, der tangential zu dem Halbkreis ausgestreckt ist und an den Seiten Ausschnitte derart aufweist, dass, wenn die Ebene des Ansatzes bündig zu einem engen Schlitz in dem Streifen mit den Auskehlungen (5) ist, der Ansatz an der Klammer (6) in den Schlitz eingesetzt werden kann und danach, nachdem er um 90° bezüglich des Schlitzes gedreht worden ist, mit seinen Ausschnitten fest in Eingriff mit den Seiten des Schlitzes sein kann und dass das andere Ende der Klammer (6) eine Zunge aufweist, die sich mehr oder weniger rechtwinklig zu dem Ansatz erstreckt und mit einem Loch für eine Schraube versehen ist, wodurch die Klammer (6) bezüglich einer gegebenen Auskehlung (5) fest befestigt werden kann.

4. Schutzvorrichtung gemäß einem der Ansprüche 1 bis 3, **dadurch gekennzeichnet, dass** die Halteteile (2) der Schutzvorrichtung ein Gehäuse (4) oder ein Leuchtengehäuse (8) aus Kunststoff aufweisen und einen Schlitz (3) haben, der bündig zu den Auskehlungen (5) liegt.

5. Schutzvorrichtung gemäß den Ansprüchen 1 bis 4, **dadurch gekennzeichnet, dass** die Halteteile (2) der Schutzvorrichtung aus Kunststoff sind, dass die Auskehlung (5) in der Form eines Metallstreifens sind und dass die Klammer (6) aus Metall, wie etwa einem rostfreien Stahl, ist.

6. Schutzvorrichtung gemäß einem der Ansprüche 1 bis 5, **dadurch gekennzeichnet, dass** die Schutzvorrichtung (1) aus einem mittleren Teil (1a) und zwei Endteilen (1b) zusammengesetzt ist, die durch Laschen (1c) aneinandergefügt sind.

## Revendications

1. Garde-boue pour un véhicule à roues, notamment garde-boue arrière pour un tracteur pour la traction d'une remorque, ledit garde-boue (1) étant configuré de telle manière que deux supports de garde-boue (7), qui s'étendent vers l'extérieur à partir du côté du châssis du tracteur, peuvent être logés dans des positions sélectionnables sur le côté extérieur du garde-boue (1), le garde-boue (1) ayant une première et une seconde pièce de fixation de garde-boue correspondante (2) sur les côtés opposés d'un plan de symétrie vertical (SP) qui, dans la position d'utilisation du garde-boue (1), passe par l'axe d'une roue à protéger, les pièces de fixation de garde-boue (2) ayant chacune une série d'échancrures (5) qui sont configurées pour recevoir un support de garde-boue (7) agencé pour s'adapter aux pièces de fixation de garde-boue (2), à la fois parallèlement au plan de symétrie (SP) et dans le sens de la longueur des supports de garde-boue (7), **caractérisé en ce que** la série d'échancrures est disposée en une ligne droite parallèle au plan de symétrie (SP).

2. Garde-boue selon la revendication 1, **caractérisé en ce que** les échancrures (5) sont semi-circulaires et de même rayon que les supports de garde-boue (7), et que chaque pièce de fixation de garde-boue (2) comporte une bride (6) également semi-circulaire qui, ensemble avec une échancrure (5), peut être serrée autour d'un support de garde-boue (7).

3. Garde-boue selon l'une des revendications 1 et 2, **caractérisé en ce qu'**à une extrémité de la bride (6) il y a un ergot qui s'étend en tangente au demi-cercle et a des découpes sur les côtés de telle manière que, quand le plan de l'ergot est aligné avec une fente étroite dans la bande avec les échancrures (5), l'ergot sur la bride (6) peut être inséré dans la fente et, après qu'on l'a tourné de 90° par rapport à la fente, peut après cela, grâce à ses découpes, s'engager fermement avec les côtés de la fente, et **en ce que** l'autre extrémité de la bride (6) a une languette qui s'étend plus ou moins à angle droit avec l'ergot et est pourvue d'un trou pour une vis, moyennant quoi la bride (6) peut être fixée fermement par rapport à une échancrure donnée (5).

4. Garde-boue selon l'une des revendications 1 à 3, **caractérisé en ce que** les pièces de fixation de garde-boue (2) ont un boîtier (4) ou un boîtier d'éclairage (8) en matière plastique et ont une fente (3) qui est alignée avec les échancrures (5).

5. Garde-boue selon l'une des revendications 1 à 4, **caractérisé en ce que** les pièces de fixation de garde-boue (2) sont en matière plastique, que les échancrures (5) ont 1a forme d'une bande métallique et que la bride (6) est en métal, par exemple en acier inoxydable.

6. Garde-boue selon l'une des revendications 1 à 5, **caractérisé en ce que** le garde-boue (1) est composé d'une pièce centrale (la) et de deux pièces terminales (1b) qui sont assemblées au moyen de ferrures (1c).
